# EUROPÄISCHE PATENTSCHRIFT

(11) **EP 2 683 143 B1**
(45) Veröffentlichungstag und Bekanntmachung des Hinweises auf die Patenterteilung: **22.06.2016**
(21) Anmeldenummer: 12175167.1
(22) Anmeldetag: 05.07.2012
(51) Int. Cl.: H04M 1/725

(54) **Verfahren zum Betreiben eines Mobilfunkgeräts, Mobilfunkgerät sowie Verfahren zum automatischen Senden einer Nachricht**
Method for operating a mobile wireless device, mobile wireless device and method for automatically sending a message
Procédé d'utilisation d'un appareil radio mobile, appareil radio mobile et procédé d'émission automatique d'un message

(43) Veröffentlichungstag der Anmeldung: 08.01.2014
(73) Patentinhaber: Wojak, Ernst, 81377 München (DE)
(72) Erfinder: Wojak, Ernst, 81377 München (DE)
(74) Vertreter: Hofstetter, Schurack & Partner

(56) Entgegenhaltungen:
- WO-A2-2009/120466
- US-A1- 2006 099 931
- US-A1- 2009 197 620
- US-A1- 2010 199 188
- US-A1- 2011 238 824
- US-B1- 7 069 018

## Beschreibung

Die vorliegende Erfindung betrifft ein Verfahren zum Betreiben eines Mobilfunkgeräts gemäß dem Oberbegriff des Patentanspruchs 1, ein Mobilfunkgerät gemäß dem Oberbegriff des Patentanspruchs 8 sowie ein Verfahren zum automatischen Senden einer Nachricht an ein Mobilfunkgerät gemäß Patentanspruch 9.

Ein solches Verfahren sowie ein solches Mobilfunkgerät sind aus dem allgemeinen Stand der Technik hinlänglich bekannt. Das Mobilfunkgerät umfasst eine Funktechnikeinrichtung, mittels welcher das Mobilfunkgerät mit wenigstens einem Funknetz über Funktechnik, d.h. drahtlos verbindbar ist. Bei dem Funknetz handelt es sich beispielsweise um ein drahtloses lokales Netzwerk, welches üblicherweise auch als WLAN (Wireless Local Area Network) bezeichnet wird.

Das Mobilfunkgerät ist beispielsweise ein Mobiltelefon, welches üblicherweise auch als Handy oder als Smartphone bezeichnet wird. Bei dem Mobilfunkgerät kann es sich auch um einen sogenannten Tablet-PC oder um einen anderweitigen, mit einer Funktechnikeinrichtung zum Verbinden des Mobilfunkgeräts mit dem Funknetz ausgestatteten Computer handeln. Das Mobilfunkgerät weist wenigstens eine Anzeige sowie eine Recheneinrichtung auf. Die Recheneinrichtung dient zum Ausführen wenigstens eines Computerprogramms, mittels welchem ein in einem Computernetzwerk bereitgestellter und über das Funknetz abrufbarer Inhalt auf der Anzeige darstellbar ist. Im Rahmen des Verfahrens zum Betreiben des Mobilfunkgeräts wird das Mobilfunkgerät über Funktechnik mit dem Funknetz verbunden, so dass das Mobilfunkgerät mit dem Funknetz Daten austauschen kann.

Ein solches Mobilfunkgerät ist beispielsweise der DE 698 26 932 T1 als bekannt zu entnehmen. Dort handelt es sich bei dem Computerprogramm um einen sogenannten Browser, welcher üblicherweise auch als Web-Browser bezeichnet wird. Ein solcher Web-Browser dient zum sogenannten Surfen im Internet und insbesondere im World Wide Web (WWW). Bei dem im Internet bzw. im World Wide Web bereitgestellten Inhalt handelt es sich um sogenannte Internetseiten oder Web-Seiten.

Um im Internet bzw. im World Wide Web surfen zu können, muss der Browser von der Recheneinrichtung ausgeführt und geöffnet sein. Das Ausführen und/oder das Öffnen wird dabei durch einen Nutzer des Mobilfunkgeräts bewirkt. Dazu betätigt der Nutzer ein entsprechendes Bedienelement des Mobilfunkgeräts. Bei dem Bedienelement kann es sich um einen Knopf handeln. Alternativ kann vorgesehen sein, dass es sich bei der Anzeige um eine berührungsempfindliche Anzeige, d.h. um einen sogenannten Touch-Screen, handelt, über den unterschiedliche Funktionalitäten und so auch das Öffnen und/oder das Starten des Browsers bewirkbar sind.

Auch aus der CA 2 444 810 A1, aus der WO 03/007553 A1 und aus der US 7 248 852 B2 ist ein Mobilfunkgerät in Form eines PDAs (Persönlicher Digitaler Assistent) bekannt, auf dessen Steuereinrichtung ein lokaler Browser ausführbar ist. Der Browser kann über das Internet generelle Informationen über Dienste von einem Server erhalten. Die generellen Informationen wiederum enthalten Informationen über Anwendungen, wie beispielsweise graphische Informationen mit Anzeigesymbolen, die auf der Anzeige des Mobilfunkgeräts anzeigbar sind. Nachdem der Browser die generellen Informationen der verfügbaren Dienste und der damit korrespondierenden Anwendungen erhalten hat, werden die Anzeigesymbole auf der Anzeige angezeigt und ein Nutzer des Mobilfunkgeräts kann durch einen einzigen Klick eine entsprechende der Anwendungen und den damit korrespondierenden Dienst starten. Durch Starten des Dienstes bzw. der Anmeldung lädt der Browser des Mobilfunkgeräts weitere Teile der Anwendung herunter. Mit anderen Worten bedeutet dies, dass stets der Nutzer eines Mobilfunkgeräts aktiv tätig werden und das Computerprogramm zum Darstellen des in dem Computernetzwerk bereitgestellten und über das Funknetz abrufbaren Inhalts auf der Anzeige aktiv starten oder öffnen muss, indem er aktiv eine entsprechende Funktion des Mobilfunkgeräts startet.

Dies führt zu einer aufwändigen und umständlichen Bedienung des Mobilfunkgeräts, insbesondere dann, wenn der Nutzer des Mobilfunkgeräts weitere Eingaben in das Mobilfunkgerät tätigen muss, um den Inhalt auch tatsächlich über das Computerprogramm auf der Anzeige anzeigen zu lassen. Bei diesen Angaben kann es sich beispielsweise um einen sogenannten Einloggprozess handeln, im Rahmen dessen der Nutzer beispielsweise persönliche Informationen sowie schwer zu merkende Passwörter eingeben muss.

Die US 7 069 018 B1 offenbart ein Mobilfunkendgerät, welches mit einem Funknetz über Funktechnik verbindbar ist und eine Anzeige sowie eine Recheneinrichtung zum Ausführen eines Computerprogramms umfasst. Ferner umfasst das Mobilfunkendgerät ein Positionssystem zum Bestimmen der Position des Mobilfunkendgeräts. Das Mobilfunkendgerät umfasst ferner eine Steuerungsfunktion zum Vorauswählen eines von mehreren, vorbestimmten Zuständen.

Die US 2010/0199188 A1 offenbart ein Verfahren zum Anzeigen einer Warnnachricht auf einem Kommunikationsgerät. Die Warnnachricht wird gesendet, wenn sich das Kommunikationsgerät an einem Zielort befindet.

Die WO 2009/120466 A2 offenbart ein Gerät mit einer kabellosen Sende-Empfangseinheit, einer Eingabeeinheit, einer Ausgabeeinheit und einer Steuerelektronik, welche betriebsmäßig mit der kabellosen Sende-Empfangseinheit, der Eingabeeinheit und der Ausgabeeinheit verbunden ist. Die Steuerelektronik reagiert auf ein von einem drahtlosen Netzwerk ausgehendes Signal, welches von der drahtlosen Sende-Empfangseinheit emfpangen wird. Das Signal umfasst Daten, welche anzeigen, dass ein Dienst für eine Anwendung in dem drahtlosen Netzwerk zur Verfügung steht. Die Steuerelektronik gibt über die Ausgabeeinheit Daten aus, um anzuzeigen, dass der Dienst für die Anwendung in dem Netzwerk zur Verfügung steht.

Des Weiteren offenbart die US 2011/0238824 A1 ein Verfahren zum Handhaben von Hotspots. Bei dem Verfahren wird erfasst, dass ein drahtloses lokales Netzwerk, mit welchem ein Gerät gerade verbunden wurde, von einem Hotspot angeboten wird. Es ist daher Aufgabe der vorliegenden Erfindung, ein Verfahren zum Betreiben eines Mobilfunkgeräts sowie ein Mobilfunkgerät der eingangs genannten Art derart weiterzuentwickeln, dass eine besonders einfache Bedienung des Mobilfunkgeräts sowie eine für den Nutzer einfache Versorgung des Nutzers mit Informationen ermöglicht ist.

Diese Aufgabe wird durch ein Verfahren mit den Merkmalen des Patentanspruchs 1, durch ein Mobilfunkgerät mit den Merkmalen des Patentanspruchs 8 sowie durch ein Verfahren mit den Merkmalen des Patentanspruchs 9 gelöst. Vorteilhafte Ausgestaltungen mit zweckmäßigen und nicht-trivialen Weiterbildungen der Erfindung sind in den übrigen Ansprüchen angegeben.

Der erste Aspekt der Erfindung betrifft ein Verfahren zum Betreiben eines mit wenigstens einem Funknetz über Funktechnik verbindbaren Mobilfunkgeräts, welches wenigstens eine Anzeige und wenigstens eine Recheneinrichtung zum Ausführen wenigstens eines Computerprogramms, mittels welchem ein in einem Computernetzwerk bereitgestellter und über das Funknetz abrufbarer Inhalt auf der Anzeige darstellbar ist, aufweist. Bei dem Verfahren wird das Mobilfunkgerät über Funktechnik mit dem Funknetz verbunden.

Zur Realisierung einer besonders einfachen Bedienung des Mobilfunkgeräts ist es erfindungsgemäß vorgesehen, dass ein Öffnen des Computerprogramms mittels der Recheneinrichtung in Abhängigkeit von einem Verbindungszustand des mit dem Funknetz verbundenen Mobilfunkgeräts bewirkt und zumindest ein Teil des Inhalts mittels des geöffneten Computerprogramms auf der Anzeige angezeigt wird. Eine das Mobilfunkgerät nutzende Person, welche auch als Nutzer bezeichnet wird, muss somit nicht aktiv tätig werden, um das Öffnen und gegebenenfalls Starten des Computerprogramms durch die Recheneinrichtung sowie die Darstellung des Inhalts auf der Anzeige zu bewirken. Die Darstellung des Inhalts erfolgt vielmehr automatisch. Dadurch können auch zeitaufwändige Eingaben von persönlichen Daten und/oder von Passwörtern in das Mobilfunkgerät durch den Nutzer vermieden werden.

Das Mobilfunkgerät wird mit wenigstens einem Netzwerkgerät des Funknetzes über Funktechnik verbunden, wobei der Verbindungszustand in Abhängigkeit von einer Signalstärke eines Signals, welches vom Netzwerkgerät an das Mobilfunkgerät übermittelt wird, ermittelt wird. Alternativ oder zusätzlich ist vorgesehen, dass der Verbindungszustand in Abhängigkeit von einer mittels des Netzwerkgeräts ermittelten Position des Mobilfunkgeräts relativ zu dem Netzwerkgerät ermittelt wird.

Alternativ oder zusätzlich wird der Verbindungszustand in Abhängigkeit von einer Zeitdauer, über welche das Mobilfunkgerät mit dem Funknetz über Funktechnik verbunden ist, ermittelt.

Vorzugsweise erfolgt bereits die Verbindung des Mobilfunkgeräts mit dem Funknetz automatisch, d.h. ohne ein aktives Zutun durch den Nutzer. Dies kann beispielsweise der Fall sein, wenn das Mobilfunkgerät zuvor bereits wenigstens einmal mit dem Funknetz verbunden war. Im Rahmen dieser erstmaligen Verbindung des Mobilfunkgeräts mit dem Funknetz gibt der Nutzer des Mobilfunkgeräts beispielsweise persönliche Daten, beispielsweise sein E-Mail-Adresse und/oder wenigstens ein Kennwort in das Mobilfunkgerät über entsprechende Eingabemittel ein, so dass das Mobilfunkgerät autorisiert ist, sich mit dem Funknetz zu verbinden. Im Anschluss an diese erstmalige Eingabe von Daten können dann weitere Verbindungen des Mobilfunkgeräts mit dem Funknetz, die sich an eine entsprechende Unterbrechung der Verbindung anschließen, erfolgen, ohne dass der Nutzer Dateneingaben am Mobilfunkgerät erneut vorzunehmen hat.

Im Rahmen der erstmaligen Verbindung wird beispielsweise auch die sogenannte MAC-Adresse (Media Access Control Adresse) des Mobilfunkgeräts an das Funknetz übermittelt, so dass bei den anschließenden Verbindungen das Mobilfunkgerät eindeutig identifiziert und in der Folge zu erneuten und durch die Recheneinrichtung durchgeführten Verbindungen mit dem Funknetz autorisiert werden kann. Bei dieser MAC-Adresse handelt es sich um eine Hardware-Adresse einer Funktechnikeinrichtung, insbesondere eines Netzwerkadapters, des Mobilfunkgeräts, über welche bzw. über welchen das Mobilfunkgerät mit dem Funknetz über Funktechnik verbunden werden kann. Die MAC-Adresse wird üblicherweise auch als Ethernet-ID, WiFi-Adresse oder physikalische Adresse bezeichnet.

Daraus ist es ersichtlich, dass eine Daten-Ein- oder Abgabe durch den Nutzer lediglich einmalig erfolgen kann, um das Mobilfunkgerät erstmalig mit dem Funknetz zu verbinden. Im Anschluss daran können weitere, sich an Unterbrechungen der Verbindungen anschließende Verbindungen des Mobilfunkgeräts mit dem Funknetz automatisch durch die Recheneinrichtung durchgeführt werden, ohne dass es eines aktiven Zutuns durch den Nutzer bedürfte.

Ferner kann alternativ oder zusätzlich vorgesehen sein, dass der Verbindungszustand in Abhängigkeit von einer Anzahl an Netzwerkgeräten des Funknetzes, mit welchen das Mobilfunkgerät über Funktechnik verbunden ist, ermittelt wird. Mit anderen Worten kann der Verbindungszustand auch durch die Anzahl der Netzwerkgeräte, welche Signale an das Mobilfunkgerät senden und/oder Signale vom Mobilfunkgerät empfangen können, charakterisiert werden.

Mit anderen Worten erfolgt das automatische und durch die Recheneinrichtung bewirkte Öffnen des Computerprogramms und Darstellen des Inhalts in Abhängigkeit von der Signalstärke und/oder von der Position des Mobilfunkgeräts relativ zu dem Netzwerkgerät und/oder von der Anzahl an Netzwerkgeräten. Dadurch kann beispielsweise vermieden werden, dass das Computerprogramm geöffnet wird, wenn sich der Nutzer mit dem Mobilfunkgerät lediglich in relativ weiter Entfernung zu dem Netzwerkgerät und somit zu dem Funknetz an dem Netzwerkgerät bzw. dem Funknetz vorbei bewegt und beispielsweise nicht beabsichtigt, eine mit dem Funknetzwerk korrespondierende Einrichtung, wie beispielsweise ein Bauwerk, ein Gebäude, ein Einkaufsgeschäft und/oder dergleichen zu betreten und/oder Informationen über die Einrichtung von außerhalb der Einrichtung zu erlangen. Hierbei kommt es lediglich zu einer relativ geringen Signalstärke und zu einem relativ großen Abstand zwischen dem Netzwerkgerät und dem Mobilfunkgerät, so dass das Computerprogramm nicht geöffnet wird.

Betritt jedoch der Nutzer die Einrichtung und/oder verweilt der Nutzer vor der Einrichtung, um sich beispielsweise die Einrichtung anzuschauen und/oder um Informationen über die Einrichtung zu erlangen, so zum Beispiel um sich Schaufenster des Einkaufsgeschäfts anzuschauen, so ist die Signalstärke relativ hoch und/oder der Abstand zwischen dem Mobilfunkgerät und dem Netzwerkgerät relativ gering, so dass in der Folge das Computerprogramm automatisch geöffnet und zumindest der Teil des Inhalts mittels des geöffneten Computerprogramms angezeigt wird.

Dadurch ist ein bedarfsgerechtes Anzeigen des Teils des Inhalts ermöglicht. Darüber hinaus kann der Nutzer mittels des Inhalts gezielt und bedarfsgerecht mit Informationen über die Einrichtung, in und/oder an welcher er verweilt, versorgt werden. Hierzu muss der Nutzer nicht aktiv tätig werden, sondern erhält die durch den Teil des Inhalts dargestellten Informationen über die Einrichtung passiv.

Bei dem Mobilfunkgerät kann es sich um ein Mobiltelefon handeln, welches üblicherweise auch als Handy oder als Smartphone bezeichnet wird. Bei dem Mobilfunkgerät kann es sich auch um einen sogenannten Tablet-PC oder eine PDA (Persönlicher Digitaler Assistent) handeln. Ebenso möglich ist es, dass es sich bei dem Mobilfunkgerät um einen PC (Personal Computer) handelt, welcher eine Funktechnikeinrichtung umfasst, mittels welcher der PC mit dem Funknetz über Funktechnik verbindbar ist. Das Verbinden mit dem Funknetz über Funktechnik wird üblicherweise auch als drahtloses Verbinden bezeichnet, da zwischen dem Mobilfunkgerät und beispielsweise dem Netzwerkgerät, über das das Mobilfunkgerät mit dem Funknetz verbunden ist, keine Leitung oder Draht vorgesehen ist, über die bzw. den das Mobilfunkgerät mit dem Netzwerkgerät verbunden ist. Vielmehr ist das Mobilfunkgerät über einen Austausch von elektromagnetischen Wellen mit dem Netzwerkgerät und somit mit dem Funknetz verbunden.

Die Signalstärke wird beispielsweise von der Recheneinrichtung des Mobilfunkgeräts ermittelt. Erreicht oder überschreitet ein die Signalstärke charakterisierender Wert einen vorgebbaren Schwellenwert, so wird das Computerprogramm mittels der Recheneinrichtung geöffnet und gegebenenfalls zuvor gestartet und der Teil des Inhalts wird mittels des geöffneten Computerprogramms angezeigt. Wird das Mobilfunkgerät nicht mit dem Funknetz verbunden oder wird das Mobilfunkgerät mit dem Funknetz verbunden, verbleibt jedoch der die Signalstärke charakterisierende Wert unterhalb des vorgebbaren Schwellenwerts, so wird das Computerprogramm nicht automatisch geöffnet und der Teil des Inhalts wird nicht dargestellt.

Unter Öffnen des Computerprogramms wird dabei verstanden, dass das Computerprogramm durch die Recheneinrichtung bereits ausgeführt, jedoch nicht auf der Anzeige angezeigt wird bzw. den Inhalt nicht anzeigt oder anzeigen kann, da eine Benutzeroberfläche des Computerprogramms nicht auf der Anzeige dargestellt wird. Dies wird üblicherweise derart bezeichnet, dass das Computerprogramm im Hintergrund ausgeführt wird.

In diesem Fall wird das Computerprogramm nicht erst gestartet sondern es wird geöffnet, so dass zumindest in einem Teilbereich der Anzeige der Teil des Inhalts auf der Anzeige dargestellt wird. Ist das Computerprogramm noch nicht gestartet, d.h. wird es noch nicht durch die Recheneinrichtung, auch nicht im Hintergrund, ausgeführt, so wird in Abhängigkeit von dem Verbindungszustand das Computerprogramm automatisch gestartet und geöffnet, so dass der Inhalt zumindest in einem Teilbereich der Anzeige für den Nutzer sichtbar angezeigt wird.

Bei dem Computernetzwerk handelt es sich vorzugsweise um das Internet und insbesondere um das World Wide Web (WWW), wobei der Teil des Internets bzw. des World Wide Web Internetseiten oder Web-Seiten sind. Der Teil des Internets bzw. des World Wide Web, welcher auf der Anzeige in Abhängigkeit von dem Verbindungszustand angezeigt wird, ist vorzugsweise wenigstens eine der Internetseiten bzw. eine der Web-Seiten. Auf der Internetseite, die in Abhängigkeit von dem Verbindungszustand automatisch dargestellt wird, werden vorzugsweise Informationen über die mit dem Funknetz korrespondierende Einrichtung, d.h. über das Bauwerk, das Gebäude, das Einkaufsgeschäft und/oder dergleichen angezeigt. Dadurch kann der Nutzer des Mobilfunkgeräts bedarfsgerecht und gezielt mit Informationen über die Einrichtung versorgt werden.

Bei dem Computerprogramm handelt es sich insbesondere um einen so genannten Web-Browser, welches üblicherweise auch als Browser bezeichnet wird mittels welchem Internetseiten und insbesondere Web-Seiten des World Wide Web anzeigbar sind.

Bei einer besonders vorteilhaften Ausführungsform der Erfindung wird der Verbindungszustand in Abhängigkeit von einer Zeitdauer, über welche das Mobilfunkgerät mit dem Funknetz über Funktechnik, insbesondere ununterbrochen, verbunden ist, ermittelt. Dadurch können das Öffnen des Computerprogramms sowie das Darstellen des Teils des Inhalts vermieden werden, wenn sich der Nutzer mit dem Mobilfunkgerät lediglich an der Einrichtung und somit an dem Funknetz vorbei bewegt, ohne eine entsprechend lange und vorgebbare Zeitdauer in und/oder an der Einrichtung zu verweilen und entsprechend mit dem Funknetz verbunden zu sein.

Erreicht oder überschreitet ein die Zeitdauer, über welche das Mobilfunkgerät mit dem Funknetz über Funknetz, insbesondere ununterbrochen, verbunden ist, charakterisierender Wert einen vorgebbaren Schwellenwert, so wird das Computerprogramm mittels der Steuerungseinrichtung automatisch geöffnet und gegebenenfalls vorher gestartet und der Teil des Inhalts wird auf der Anzeige dargestellt.

Verbleibt der die Zeitdauer charakterisierende Wert unterhalb des Schwellenwerts, so wird der Teil des Inhalts nicht automatisch angezeigt. Dazu kommt es beispielsweise, wenn das Mobilfunkgerät nur kurzzeitig mit dem Funknetz verbunden ist und es nach einer kurzen Zeitdauer nach dem Verbinden zu einer Unterbrechung der Verbindung des Mobilfunkgeräts mit dem Funknetz kommt, da sich beispielsweise der Nutzer mit dem Mobilfunkgerät außer Reichweite des Netzwerkgeräts und somit des Funknetzes bewegt.

Bei einer besonders vorteilhaften Ausführungsform der Erfindung wird als der Teil des Inhalts eine Internetseite, insbesondere ein Web-Seite des Internets, insbesondere des World Wide Web, mittels des Computerprogramms angezeigt. Hierdurch kann der Nutzer besonders übersichtlich und anschaulich mit optischen und/oder akustischen Informationen über die mit dem Funknetz korrespondierende Einrichtung versorgt werden.

Bei weiteren vorteilhaften Ausführungsformen der Erfindung wird das Mobilfunkgerät mit einem drahtlosen lokalen Netzwerk als dem Funknetz verbunden. Ein solches drahtloses lokales Netzwerk wird üblicherweise als WLAN (Wireless Local Area Network) bezeichnet. Ein solches drahtloses lokales Netzwerk ist einer vorgebbaren Einrichtung zugeordnet, über die der Nutzer gezielt und bedarfsgerecht mit Informationen versorgt werden kann, die ihm durch den Teil des Inhalts bereitgestellt werden.

Das Mobilfunkgerät kann auch mit einem Mobilfunknetz verbunden sein. Zeitlich vor dem Verbinden des Mobilfunkgeräts mit dem drahtlosen lokalen Netzwerk können beispielsweise Inhalte des Computernetzwerks über das Mobilfunknetz bezogen und auf der Anzeige angezeigt werden. Mit anderen Worten erfolgt das Surfen im Internet - wenn das Mobilfunkgerät nicht mit dem drahtlosen lokalen Netzwerk verbunden ist - über das Mobilfunknetz, wobei es sich beispielsweise um UMTS (Universal Mobile Telecommunications System), GPRS (General Packet Radio Service) oder LTE (Long-Term-Evolution) handelt.

Erfolgt nun die Verbindung des Mobilfunkgeräts mit dem drahtlosen lokalen Netzwerk, so findet eine beispielsweise durch die Recheneinrichtung bewirkte Umschaltung des Mobilfunkgeräts statt, wodurch in der Zeit, in der das Mobilfunkgerät mit dem drahtlosen lokalen Netzwerk verbunden ist, Inhalte des Computernetzwerks über das drahtlose lokale Netzwerk bezogen und auf der Anzeige angezeigt werden. Mit anderen Worten erfolgt das Surfen im Internet mittels des Mobilfunkgeräts - wenn das Mobilfunkgerät mit dem drahtlosen lokalen Funknetz verbunden ist -vnicht mehr über das Mobilfunknetz sondern über das davon unabhängige bzw. separate, drahtlose lokale Netzwerk (WLAN).

Hierdurch kann ein von einem Mobilfunkbetreiber, der das Mobilfunknetz bereitstellt, begrenztes Datenvolumen, welches innerhalb einer vorgebbaren Zeitdauer von dem Mobilfunkgerät über das Mobilfunknetzwerk beispielsweise mit einer vorgebbaren Übermittlungsgeschwindigkeit empfangen und/oder gesendet werden darf, geschont werden. Mit anderen Worten wird das begrenzte Datenvolumen durch die Nutzung des drahtlosen lokalen Netzwerks nicht beeinträchtig.

Während das Mobilfunkgerät mit dem drahtlosen lokalen Netzwerk verbunden ist, erfolgt vorzugsweise jedoch nicht die vollständige Trennung vom Mobilfunknetzwerk. Es wird ein Dienst oder ein Protokoll oder dergleichen, welcher bzw. welches zum Surfen im Internet genutzt wird, wenn das Mobilfunkgerät nicht mit dem drahtlosen lokalen Netzwerk verbunden ist, deaktiviert und/oder nicht genutzt. Anderweitige Dienste, Protokolle oder dergleichen welche zum Empfangen und/oder Senden von MMS, SMS und/oder zum Durchführen von Telefongesprächen genutzt werden, bleiben auch dann aktiviert und/oder können auch dann genutzt werden, wenn das Mobilfunkgerät mit dem drahtlosen lokalen Netzwerk verbunden ist. Dadurch wird beispielsweise die Möglichkeit, dem Nutzer des Mobilfunkgeräts auch dann eine SMS zu schicken und/oder oder den Nutzer auch dann anzurufen, wenn sein Mobilfunkgerät mit dem drahtlosen lokalen Netzwerk verbunden ist, nicht beeinträchtigt.

Es hat sich als besonders vorteilhaft gezeigt, wenn mittels des Funknetzes eine Position des Mobilfunkgeräts relativ zur oder auf der Erde ermittelt wird, wobei in Abhängigkeit von der ermittelten Position zumindest ein vom angezeigten Teil des Inhalts unterschiedlicher, weiterer Teil des Inhalts angezeigt wird. Umfasst beispielsweise die Einrichtung, mit dessen Funknetz das Mobilfunkgerät verbunden ist, mehrere, unterschiedliche Bereiche, so kann durch die Ermittlung der Position des Mobilfunkgeräts und somit des Nutzers relativ zur Erde und somit relativ zu wenigstens einem Netzwerkgerät des Funknetzes ermittelt werden, in welchem der Bereiche der Einrichtung sich der Nutzer mit dem Mobilfunkgerät aufhält.

So ist es möglich, den Nutzer gezielt und bedarfsgerecht über den dargestellten Teil des Inhalts mit Information über den Bereich zu versorgen, in welchem sich der Nutzer gerade aufhält. Handelt es sich beispielsweise bei der Einrichtung um ein Museum mit unterschiedlichen Räumen, in welchen unterschiedliche Gegenstände ausgestellt werden, so kann der Nutzer über den Teil des Inhalts gezielt mit Informationen über die einzelnen Räume und gegebenenfalls über die einzelnen Gegenstände in den Räumen versorgt werden.

Handelt es sich bei der Einrichtung beispielsweise um eine Örtlichkeit mit einer Mehrzahl von Bauwerken, so kann der Nutzer des Mobilfunkgeräts mit Informationen über dasjenige der Bauwerke versorgt werden, in oder vor oder auf oder unter welchem er sich gerade befindet. So ist es beispielsweise möglich, den Nutzer über unterschiedliche Einrichtungen einer Stadt als die Einrichtung zu informieren, durch welche sich der Nutzer mit dem Mobilfunkgerät bewegt. Verweilt der Nutzer beispielsweise eine gewisse Zeitdauer in oder an einer Einrichtung der Stadt, so kann er durch den Teil des Inhalts mit entsprechenden Informationen über diese Einrichtung der Stadt versorgt werden, ohne aktiv tätig werden zu müssen und ohne aufwändige und umständliche Dateneingaben vorzunehmen.

Die Einrichtung oder ein Betreiber der Einrichtung stellt dabei das Funknetz bereit, damit Besucher oder Gäste seiner Einrichtung im Internet surfen können. Ein solches Bereitstellen einer Zugangsmöglichkeit über ein drahtloses Funknetz zum Internet bzw. zum World Wide Web wird üblicherweise als Hotspot bezeichnet. Bei der Einrichtung kann es sich um eine öffentliche Räumlichkeit wie ein Restaurants, Cafe, Hotel, Krankenhaus oder einen öffentlichen Platz wie einen Flughafen, Bahnhof usw. handeln. An einem solchen Hotspot kann der Nutzer mittels WLAN-Technologie eine Verbindung zum Internet aufbauen.

In weiterer vorteilhafter Ausgestaltung der Erfindung wird in Abhängigkeit von dem Verbindungszustand wenigstens eine, mittels eines durch die Recheneinrichtung ausführbaren Computerprogramms auf der Anzeige anzeigbaren Nachricht an das Mobilfunkgerät übermittelt. Zur Übermittlung der Nachricht können die bei der erstmaligen Verbindung des Mobilfunkgeräts mit dem Funknetz übermittelten Daten, insbesondere die E-Mail-Adresse, verwendet werden. Dadurch ist es möglich, den Nutzer gezielt mit für ihn nützlichen Informationen zu versorgen.

Im Rahmen der erstmaligen Verbindung kann der Nutzer z. B. persönliche Angaben beispielsweise über seine Interessen, Wünsche und/oder dergleichen machen, so dass die an ihn übermittelte Nachricht hinsichtlich ihres Nachrichteninhalts an die Angaben angepasst werden kann. Dadurch kann der Nutzer mit personifizierten, d.h. mit auf seine Person und/oder Wünsche und/oder Interesse angepassten Informationen versorgt werden.

Alternativ oder zusätzlich ist es möglich, auch den Teil des Inhalts an die bei der erstmaligen Verbindung durchgeführte Datenabgabe anzupassen, so dass der Nutzer über den Teil des Inhalts mit personifizierten und nutzerspezifischen Informationen versorgt werden kann. Dadurch kann dem Nutzer beispielsweise mitgeteilt werden, welche Interessen, Wünsche und/oder dergleichen durch die Einrichtung, in oder an welcher sich der Nutzer gerade aufhält, gedeckt werden können.

Um den Nutzer übersichtlich und optisch ansprechend mit Informationen versorgen zu können, ist es vorzugsweise vorgesehen, dass als die Nachricht eine E-Mail übermittelt wird. Jedoch ist auch die Übermittlung einer SMS (short message service) oder einer MMS (multimedia messaging service) möglich.

In weiterer Ausgestaltung der Erfindung ist es vorgesehen, dass die Nachricht in Abhängigkeit von wenigstens einer mobilfunkgerätespezifischen und beim Verbinden an das Funknetz übertragenen Information übermittelt wird. Bei dieser mobilfunkgerätespezifischen Information kann es sich um die zuvor geschilderte MAC-Adresse handeln, über die das Mobilfunkgerät und über dieses der Nutzer eindeutig identifiziert werden kann. Dadurch kann der Nutzer mit persönlichen und individuellen Informationen versorgt werden. So ist es für den Nutzer auch auf schnelle und einfache Weise möglich, zu erkennen, ob die mit dem Funknetz korrespondierende Einrichtung seine Wünsche und/oder Interessen decken kann.

Der zweite Aspekt der Erfindung betrifft ein Mobilfunkgerät, mit einer Funktechnikeinrichtung zum verbinden des Mobilfunkgeräts mit wenigstens einem Funknetz über Funktechnik, mit wenigstens einer Anzeige und mit wenigstens einer Recheneinrichtung zum Ausführen wenigstens eines Computerprogramms, mittels welchem ein in einem Computernetzwerk bereitgestellter und über das Funknetz abrufbarer Inhalt auf der Anzeige des Mobilfunkgeräts darstellbar ist.

Zur Realisierung einer besonders einfachen Bedienung des Mobilfunkgerätes ist es erfindungsgemäß vorgesehen, dass die Recheneinrichtung dazu ausgelegt ist, in Abhängigkeit von einem Verbindungszustand des mit dem Funknetz verbundenen Mobilfunkgeräts ein Öffnen des Computerprogramms zu bewirken und zumindest einen Teil des Inhalts mittels des geöffneten Computerprogramms auf der Anzeige anzuzeigen. Mit anderen Worten ist die Recheneinrichtung des erfindungsgemäßen Mobilfunkgeräts dazu ausgelegt, dass erfindungsgemäße Verfahren durchzuführen. Vorteilhafte Ausgestaltungen des ersten Aspekts der Erfindung sind als vorteilhafte Ausgestaltungen des zweiten Aspekts der Erfindung anzusehen und umgekehrt.

Das Mobilfunkgerät wird mit wenigstens einem Netzfunkgerät des Funknetzes über Funktechnik verbunden, wobei die Recheneinrichtung dazu ausgelegt ist, den Verbindungszustand in Abhängigkeit von einer Signalstärke eines Signals, welches vom Netzwerkgerät an das Mobilfunkgerät übermittelt wird, und/der in Abhängigkeit von einer mittels des Netzwerkgeräts ermittelten Position des Mobilfunkgeräts relativ zu dem Netzwerkgerät zu ermitteln.

Alternativ oder zusätzlich ist die Recheneinrichtung dazu ausgelegt, den Verbindungszustand in Abhängigkeit von einer Zeitdauer, über welche das Mobilfunkgerät mit dem Funknetz über Funktechnik verbunden ist, zu ermitteln.

Das erfindungsgemäße Mobilfunkgerät ermöglicht das automatische Darstellen des Teils des Inhalts auf der Anzeige, ohne dass der Nutzer aktiv werden und beispielsweise Daten eingeben muss. Dies ist insbesondere dann vorteilhaft, wenn das Funknetz einer Einrichtung zugeordnet ist, welche der Nutzer häufig aufsucht und wieder verlässt. Hierbei kommt es zu einer Vielzahl von Verbindungsvorgängen des Mobilfunkgeräts mit dem Funknetz und von Trennungsvorgängen des Mobilfunkgeräts vom Funknetz. Das im Anschluss eines Trennungsvorgangs erfolgende Wiederverbinden nach dem erstmaligen Verbinden des Mobilfunkgeräts mit dem Funknetz kann dabei automatisch und ohne Zutun des Nutzers ablaufen.

Dies ist auch vor allem dann vorteilhaft, wenn der Nutzer mit dem Mobilfunkgerät Einrichtungen an unterschiedlichen Orten auf der Erde besucht, deren Funknetze alle die gleichen Zugangs- bzw. Verbindungsvoraussetzungen aufweisen. Dann können die Verbindungen des Mobilfunkgeräts mit den jeweiligen Funknetzen an den unterschiedlichen Orten automatisch und ohne aktives Zutun durch den Nutzer erfolgen, so dass der Nutzer passiv mit Informationen über die entsprechende Einrichtung an dem korrespondierenden Ort auf der Erde versorgt werden kann. Insbesondere ist es nicht nötig, dass der Nutzer bei jeder erneuten Verbindung mit den jeweiligen Funknetzen, die auf einer entsprechenden Unterbrechung der Verbindung folgt, Zugangsdaten wie persönliche Informationen und/oder E-Mail-Adresse und/oder Passwörter zeitaufwändig in das Mobilfunkgerät eingeben muss.

Der dritte Aspekt der Erfindung betrifft ein Verfahren zum automatischen Senden wenigstens einer Nachricht an ein mit einem Mobilfunknetz und mit zumindest einem, vom Mobilfunknetz unterschiedlichen, lokalen Funknetz über Funktechnik verbindbares Mobilfunkgerät. Das Mobilfunkgerät weist ferner wenigstens eine Anzeige und wenigstens eine Recheneinrichtung zum Ausführen wenigstens eines Computerprogramms auf, wobei mittels des Computerprogramms eine an das Mobilfunkgerät übermittelte Nachricht auf der Anzeige darstellbar ist. Bei dem Verfahren wird an das mit dem lokalen Funknetz verbundene Mobilfunkgerät eine auf der Anzeige mittels des Computerprogramms anzeigbare Nachricht in Abhängigkeit von einem Verbindungszustand des mit dem Funknetz verbundenen Mobilfunkgeräts übermittelt. Das Mobilfunkgerät wird mit wenigstens einem Netzwerkgerät des Funknetzes über Funktechnik verbunden, wobei der Verbindungszustand in Abhängigkeit von der Signalstärke eines Signals, welches vom Netzwerkgerät an der Mobilfunkgerät übermittelt wird, und/oder in Abhängigkeit von einer mittels des Netzwerkgeräts ermittelten Position des Mobilfunkgeräts relativ zu dem Netzwerk ermittelt. Alternativ oder zusätzlich wird der Verbindungszustand in Abhängigkeit von einer Zeitdauer, über welche das Mobilfunkgerät mit dem Funknetz über Funktechnik verbunden ist,
ermittelt. Vorteilhafte Ausgestaltungen der ersten beiden Aspekte der Erfindung sind als vorteilhafte Ausgestaltungen des dritten Aspekts der Erfindung anzusehen und umgekehrt.

Dies bedeutet, dass zusätzlich oder alternativ zum Anzeigen des Teils des Inhalts des Computernetzwerks die Nachricht automatisch an das Mobilfunkgerät übermittelt wird, wenn wenigstens ein den Verbindungszustand charakterisierendes Kriterium, wie es beispielsweise im Rahmen der ersten beiden Aspekte der Erfindung geschildert ist (Zeitdauer der Verbindung, Signalstärke), erfüllt ist.

Hierbei können die oben geschilderten, im Rahmen der erstmaligen Verbindung durch den Nutzer vorgenommenen Angaben, insbesondere persönlichen Angaben, wie beispielsweise über seine E-Mail-Adresse, seine Interessen, Wünsche und/oder dergleichen genutzt werden, um ihm die Nachricht über sein Mobilfunkgerät zukommen zu lassen und ihn im Rahmen der Nachricht automatisch mit Informationen über seine aktuelle Umgebung zukommen zu lassen.

Insbesondere ist es möglich, die an ihn übermittelte Nachricht hinsichtlich ihres Nachrichteninhalts an die Angaben anzupassen. Dadurch kann der Nutzer mit personifizierten, d.h. mit auf seine Person und/oder Wünsche und/oder Interesse angepassten Informationen versorgt werden. Dadurch kann der Nutzer mit Informationen versorgt werden, wo in seiner Umgebung seine Interessen, Wünsche, Vorhaben und/oder befriedigt werden können.

Befindet sich der Nutzer mit seinem Mobilfunkgerät beispielsweise vor oder in einem Einkaufsgeschäft und hat der Nutzer im Rahmen der vorgenommenen Angaben angegeben, dass er sich für wenigstens ein Produkt oder eine Produktart wie beispielsweise Sportartikel interessiert, so kann ihm im Rahmen der Nachricht automatisch eine Information übermittelt werden, wo in dem Ladengeschäft die von ihm spezifizierte Produktart aufzufinden ist, welche Produkte der Produktart zu welchem Preis und gegebenenfalls in welcher Größe, Farbvariationen und/oder dergleichen zu finden sind.

Ein weiteres Beispiel ist, dass sich der Nutzer mit seinem Mobilfunkgerät vor oder in einem historischen Bauwerk oder Museum befindet. Hat der Nutzer im Rahmen der vorgenommenen Angaben angegeben, dass er sich für einen bestimmten Kunststil oder einen bestimmten Künstler interessiert, so kann ihm im Rahmen der Nachricht automatisch eine Information übermittelt werden, wo in dem Bauwerk bzw. in dem Museum Kunstobjekte dieses Kunststils und/oder dieses Künstlers zu finden sind. Ferner kann er über die automatisch an sein Mobilfunkgerät übermittelte Nachrichtung mit weiteren Informationen über den Kunststil bzw. das Kunstobjekt versorgt werden. Vorteilhafterweise wird die Nachricht über das lokale Funknetz übermittelt. Dadurch kann beispielsweise ein innerhalb eines Zeitraums zur Verfügung stehendes Datenvolumen, welches über das Mobilfunknetz an das und von dem Mobilfunkgerät übertragen wird, eingespart werden.

Um den Nutzer übersichtlich und optisch ansprechend mit Informationen versorgen zu können, ist es vorzugsweise vorgesehen, dass als die Nachricht eine E-Mail übermittelt wird. Jedoch ist auch die Übermittlung einer SMS (short message service) oder einer MMS (multimedia messaging service), insbesondere über das Mobilfunknetz, möglich.

Das Computerprogramm zum Anzeigen der Nachricht auf der Anzeige, welches im Folgenden auch als Nachrichtenprogramm bezeichnet wird, ist nicht notwendigerweise das Computerprogramm zum Darstellen des in dem Computernetzwerk bereitgestellten Inhalts. Bei dem Programm zum Anzeigen der Nachricht handelt es sich beispielsweise um ein sogenanntes E-Mail- oder Mail-Programm, welches zum Anzeigen von E-Mails ausgelegt ist.

Dabei kann beispielsweise vorgesehen sein, dass das Nachrichtenprogramm in Abhängigkeit von dem Verbindungszustand des Mobilfunkgeräts mit dem lokalen Funknetz geöffnet wird, d.h. automatisch geöffnet wird. Der Nutzer muss somit nicht aktiv tätig werden, um das Nachrichtenprogramm zu öffnen. Vielmehr kann er zumindest im Wesentlichen passiv mit der Nachricht und den darin enthaltenen Informationen versorgt werden.

Ferner kann dabei vorgesehen sein, dass in Abhängigkeit von dem Verbindungszustand des Mobilfunkgeräts mit dem lokalen Funknetz nicht nur das Nachrichtenprogramm geöffnet, sondern auch die übermittelte Nachricht auf der Anzeige angezeigt wird. Der Nutzer kann somit die Nachricht schnell und einfach lesen, ohne das Nachrichtenprogramm und die Nachricht aufrufen zu müssen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Fig. alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

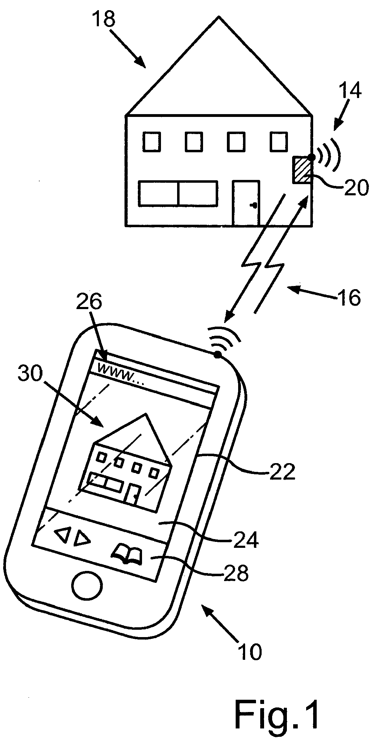

- Fig. 1: eine schematische Perspektivansicht eines Mobilfunkgeräts, welches mit einem einer in Fig. 1 dargestellten Einrichtung zugeordneten Funknetz über Funktechnik verbindbar ist und wenigstens eine Anzeige sowie wenigstens eine Recheneinrichtung zum Ausführen wenigstens eines Computerprogramms zum Darstellen eines in einem Computernetzwerk bereitgestellten und über das Funknetz abrufbaren Inhalts auf der Anzeige umfasst, wobei das Computerprogramm in Abhängigkeit von einem Verbindungszustand des Mobilfunkgeräts mit dem Funknetz geöffnet und zumindest ein Teil des Inhalts mittels des geöffneten Computerprogramms auf der Anzeige angezeigt wird; und

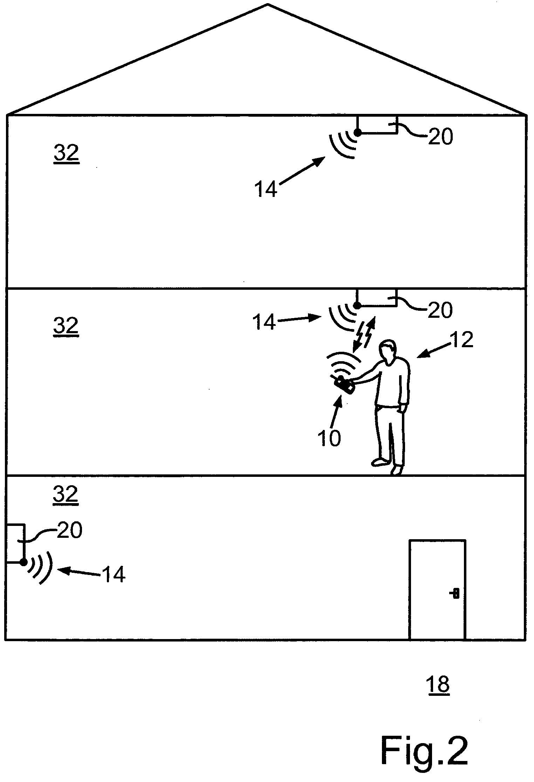

- Fig. 2: eine schematische Ansicht einer Einrichtung in Form eines Gebäudes, welchem ein lokales Funknetz zugeordnet ist und welches mehrere Räume aufweist, wobei ein Nutzer des Mobilfunkgeräts gem. Fig. 1 über sein Mobilfunkgerät und das Funknetz automatisch mit Informationen über die einzelnen Räume versorgbar ist.

Fig. 1 zeigt ein Mobilfunkgerät 10, welches mit einem Mobilfunknetz über Funktechnik verbindbar ist. Über das Mobilfunknetz kann ein in Fig. 2 schematisch dargestellter Nutzer 12 des Mobilfunkgeräts 10 Telefongespräche führen.
Das Mobilfunkgerät 10 umfasst eine in Fig. 1 nicht erkennbare Funktechnikeinrichtung, mittels welcher das Mobilfunkgerät 10 mit einem vom Mobilfunknetz unabhängigen und verschiedenen, weiteren Funknetz 14 über Funktechnik, d. h. drahtlos über elektromagnetische Wellen verbindbar ist. Wie durch Richtungspfeile 16 dargestellt ist, können so Daten zwischen dem Funknetz 14 und dem Mobilfunkgerät 10 ausgetauscht werden.

Bei dem Funknetz 14 handelt es sich vorliegend um ein so genanntes drahtloses lokales Netzwerk (WLAN - Wireless Local Area Network), das einer Einrichtung in Form eines Gebäudes 18 zugeordnet ist. Das Gebäude 18 ist mit einem Netzwerkgerät 20 des Funknetzes 14 versehen. Das Mobilfunkgerät 10 wird dabei mit dem Netzwerkgerät 20 bzw. über dieses mit dem Funknetz 14 verbunden.

Bei dem Funknetz 14 handelt es sich um das drahtlose lokale Netzwerk, da Mobilfunkgeräte wie das Mobilfunkgerät 10 nur dann mit dem Funknetz 14 verbunden werden können, wenn sie sich in einem nur relativ geringen Abstand zu dem Gebäude 18 und somit zu dem Netzwerkgerät 20 befinden. Dieser Abstand hängt dabei insbesondere von einer Sendeleistung des Netzwerkgeräts 20 ab. Ist das Mobilfunkgerät 10 entsprechend weit von dem Netzwerkgerät 20 beabstandet, so kann das Mobilfunkgerät 10 nicht dem Funknetz 14 verbunden werden und Daten mit dem Funknetz 14 austauschen.

Das Mobilfunkgerät 10 umfasst eine in Fig. 1 nicht erkennbare Recheneinrichtung, mittels welcher unterschiedliche Computerprogramme des Mobilfunkgeräts 10 ausführbar sind. Das Mobilfunkgerät 10 umfasst des Weiteren eine Anzeige 22, auf welcher jeweilige Benutzeroberflächen der durch die Recheneinrichtung ausführbaren Programme darstellbar sind. Über die jeweiligen Benutzeroberflächen kann der Nutzer 12 mit den Computerprogrammen und somit mit dem Mobilfunkgerät 10 interagieren und beispielsweise Daten eingeben.

Bei einem der durch die Recheneinrichtung ausführbaren Computerprogramme handelt es sich um einen so genannten Web-Browser 24, welcher auch als Browser bezeichnet wird. Der Web-Browser 24 dient zum Darstellen eines im Internet und insbesondere im World Wide Web bereitgestellten Inhalts. Mit anderen Worten kann der Nutzer 12 über den Web-Browser 24 im Internet und insbesondere im World Wide Web surfen.

In Fig. 1 ist der Web-Browser 24 geöffnet, wird somit von der Steuerungseinrichtung ausgeführt und auf der Anzeige 22 dargestellt. Der Web-Browser 24 umfasst dabei eine so genannte Adresszeile 26, in welcher beispielsweise eine mit "www." Beginnende Internetadresse eingetragen ist. Der Web-Browser 24 umfasst auch eine Bedienungsleiste 28 zum Aufrufen unterschiedlicher Web-Seiten. Zudem umfasst der Web-Browser 24 einen Anzeigebereich 30, in welchem die entsprechenden Web-Seiten angezeigt bzw. dargestellt werden. Wie Fig. 1 zu entnehmen ist, nimmt dabei der Anzeigebereich 30 lediglich einen überwiegenden Teilbereich der Anzeige 22, jedoch nicht die gesamte Anzeige 22 ein.

Um das Mobilfunkgerät 10 erstmalig mit dem Funknetz 14 des Gebäudes 18 über Funktechnik verbinden zu können, bedarf es einer erstmaligen Eingabe von Daten in das Mobilfunkgerät 10 durch den Nutzer 12. Bei diesen Daten handelt es sich beispielsweise um ein Passwort. Ebenso kann beispielsweise eine Registrierung mit persönlichen Daten und/oder mit einer E-Mail-Adresse des Nutzers 12 vorgesehen sein, um das Mobilfunkgerät 10 über Funktechnik mit dem Funknetz 14 verbinden zu können.

Diese zur erstmaligen Verbindung notwendigen Daten können in einer Speichereinrichtung des Mobilfunkgeräts 10 gespeichert werden, so dass diese Dateneingabe nicht nur erstmalig sondern auch einmalig ist, solange es zu keiner Löschung der Speichereinrichtung bzw. der eingegebenen Daten kommt. Bei weiteren, sich an die erstmalige Verbindung anschließenden Verbindungen kann auf die gespeicherten Daten rückgegriffen werden, so dass die Verbindung dann ohne aktives Zutun durch den Nutzer 12 erfolgen kann.
Alternativ kann es sich bei dem Funknetz 14 auch um ein so genanntes freies Funknetz handeln, wobei keinerlei Ein- oder Abgabe von Daten wie Kennwörtern und/oder dergleichen durchgeführt werden muss. Beim erstmaligen Verbinden mit dem freien Funknetz kann lediglich eine erstmalige und gegebenenfalls einmalige Interaktion des Nutzers 12 mit dem Mobilfunkgerät 10 erfolgen, so dass die Verbindung des Mobilfunkgeräts 10 mit dem Funknetz 14 erstmalig erfolgt.

Schließt sich an die erstmalige Verbindung eine Unterbrechung der Verbindung an, beispielsweise wenn sich der Nutzer 12 mit dem Mobilfunkgerät 10 entsprechend weit von dem Netzwerkgerät 20 weg bewegt, so können darauffolgende Verbindungen des Mobilfunkgeräts 10 mit dem Funknetz 14, beispielsweise wenn sich der Nutzer 12 mit dem Mobilfunkgerät 10 wieder dem Netzwerkgerät 20 nähert, automatisch und ohne aktives Zutun, d. h. ohne Dateneingabe und/oder Datenabgabe sowie ohne Interaktion des Nutzers 12 mit dem Mobilfunkgerät 10 erfolgen.

Um nun eine besonders einfache und komfortable Bedienung des Mobilfunkgeräts 10 zu ermöglichen, wird der Web-Browser 24 in Abhängigkeit von einem Verbindungszustand, welcher die Verbindung des Mobilfunkgeräts 10 mit dem Funknetz 14 über Funktechnik charakterisiert, geöffnet und eine in Fig. 1 schematisch dargestellte und mit dem Gebäude 18 korrespondierende Web-Seite mittels des geöffneten Web-Browsers 24 auf der Anzeige 22 angezeigt.

Bei der Web-Seite handelt es sich dabei um einen Teil eines Inhalts des Internets und insbesondere des World Wide Web, wobei das Internet und insbesondere das World Wide Web ein Computernetzwerk ist. Durch dieses automatische Öffnen und Darstellen wird der Nutzer 12 automatisch und gezielt mit Informationen über das Gebäude 18 versorgt, die der Nutzer 12 der Web-Seite entnehmen kann.

Handelt es sich bei dem Gebäude 18 beispielsweise um ein Museum, so kann der Nutzer 12 über aktuelle Ausstellungen und/oder Veranstaltungen insbesondere in Abhängigkeit von der aktuellen Uhrzeit versorgt werden. Alternativ oder zusätzlich ist es möglich, den Nutzer 12 über die Web-Seite mit Informationen über das Gebäude 18 selbst zu versorgen, beispielsweise dann, wenn es sich bei dem Gebäude 18 um ein historisches Gebäude handelt. Handelt es sich bei dem Gebäude 18 um einen Einkaufsladen, so kann der Nutzer 12 über aktuelle Produktangebote informiert werden.

Erfolgt die erstmalige Verbindung des Mobilfunkgeräts 10 mit dem Funknetz 14 unter Abgabe bzw. Angabe von persönlichen Daten und/oder Informationen über den Nutzer 1 2, d. h. unter Angabe oder Abgabe von nutzerspezifischen Informationen, so können die nutzerspezifischen, persönlichen Informationen über den Nutzer 12 dazu verwendet werden, die der Web-Seite zu entnehmende Informationen auf die nutzerspezifischen Informationen anzupassen.

Bei der erstmaligen Verbindung und/oder bei einer entsprechenden Registrierung, um sich mit dem Funknetz 14 verbinden zu können, kann der Nutzer 12 beispielsweise Angaben über seine Interessen und/oder Wünsche machen. In Abhängigkeit von diesen Angaben können dann auf der Web-Seite entsprechende Informationen angezeigt werden, ob diese Interessen und/oder Wünsche durch und/oder in dem Gebäude 18 gedeckt werden können. Dadurch ist eine bedarfsgerechte und gezielte Informationsversorgung des Nutzers 12 möglich.

Erfolgt die Verbindung des Mobilfunkgeräts 10 mit dem Funknetz 14 in Abhängigkeit von einer Signalstärke eines Signals, welches von dem Netzwerkgerät 20 an das Mobilfunkgerät 10 übermittelt wird, und/oder in Abhängigkeit von einer mittels des Netzwerkgeräts 20 ermittelten Position des Mobilfunkgeräts 10 relativ zu dem Netzwerkgerät 20 und somit relativ zum Gebäude 18 und/oder in Abhängigkeit von einer Zeitdauer, über welche das Mobilfunkgerät 10 mit dem Funknetz 14 über Funktechnik ununterbrochen verbunden ist, so kann dadurch das automatische Öffnen des Web-Browsers 24 und das automatische Darstellen der Web-Seite verhindert werden, wenn sich der Nutzer 12 mit dem Mobilfunkgerät 10 lediglich in entsprechender Entfernung an dem Gebäude 18 vorbei bewegt und/oder nur kurz vor und/oder in diesem verweilt, eine längere Verweildauer jedoch nicht beabsichtigt ist.

Befindet sich der Nutzer 12 mit dem Mobilfunkgerät 10 jedoch besonders lange und/oder besondere nahe in oder an dem Gebäude 18, so kann darauf rückgeschlossen werden, dass der Nutzer 12 auch tatsächlich Informationen über das Gebäude 18 und/oder über dort angebotene Produkte und/oder Dienstleistungen wünscht, so dass dann der Nutzer 12 mit entsprechenden Informationen über die Web-Seite versorgt werden kann. Der Nutzer 12 kann dabei passiv bleiben und muss nicht aktiv tätig werden.

Optional kann auch wenigstens eine Nachricht beispielsweise in Form einer E-Mail an das Mobilfunkgerät 10 übermittelt werden, wobei die Angabe oder Abgabe seiner E-Mail-Adresse genutzt wird. Dadurch kann der Nutzer 12 mit weiteren Informationen versorgt werden.

Kommt es zu einer Unterbrechung der Verbindung und zu einer darauf folgenden, erneuten Verbindung, so kann das Mobilfunkgerät 10 beispielsweise über seine MAC-Adresse, d. h. über eine eindeutige Hardware-Adresse seines Netzwerkadapters und/oder über eine IP-Nummer identifiziert werden, so dass dann der Nutzer 12 mit nutzerspezifischen und persönlichen Informationen versorgt werden kann.

Die Anzeige der Web-Seite über den Web-Browser 24 ist auch insofern vorteilhaft, als der Nutzer 12 keine zusätzlichen Applikationen, d. h. Anwendungen herunterladen und installieren muss. Vielmehr wird der ohnehin auf dem Mobilfunkgerät 10 im Rahmen eines Betriebssystems installierte Web-Browser 24 genutzt. Dadurch, dass der Nutzer 12 über das Funknetz 14 mit Informationen versorgt wird, wird auch sein Datenvolumen zum Herunterladen von Daten aus dem Internet über das Mobilfunknetz nicht beeinträchtigt. Dadurch können auch sehr hohe Datenmengen an das Mobilfunkgerät 10 übertragen werden, ohne das Datenvolumen zu beeinträchtigen. Darüber hinaus bleibt dem Nutzer 12 ein ständiges, neues Anmelden erspart. Ferner kann er Echtzeitinformationen über seine Umgebung, über Inhalte, über Angebote sowie über Termine, Veranstaltungen, Fahrpläne und/oder dergleichen versorgt werden.

Des Weiteren ist es möglich, mittels eines Positionierungssystems, insbesondere mittels eines satellitengestützten Positionierungssystems, die Position des Mobilfunkgeräts 10 und somit des Nutzers 12 relativ zur Erde und somit relativ zum Gebäude 18 zu ermitteln, so dass in Abhängigkeit von der Position des Nutzers 12 relativ zum Gebäude 18 unterschiedliche Web-Seiten mit unterschiedlichen Informationen über entsprechende Teilbereiche des Gebäudes 18 an das Mobilfunkgerät 10 übermittelt werden können.
Alternativ oder zusätzlich kann vorgesehen sein, das Funknetz 14 zu verwenden, um die Position des Mobilfunkgeräts 10 und somit des Nutzers 12 relativ zum Gebäude 18, insbesondere innerhalb des Gebäudes 18, zu ermitteln. Dies ist anhand von Fig. 2 veranschaulicht.

In unterschiedlichen Teilbereichen 32 des Gebäudes 18 innerhalb desselbigen sind jeweilige Netzwerkgeräte 20 des Funknetzes 14 vorgesehen. Bei den unterschiedlichen Teilbereichen 32 handelt es sich beispielsweise um unterschiedliche, räumlich zumindest teilweise voneinander getrennte Abteilungen und/oder Stockwerke des Gebäudes 18. Da das Mobilfunkgerät 10 durch das Gebäude 18 zur Umgebung des Gebäudes 18 hin abgeschirmt sein kann, so dass die Bestimmung der Position des Mobilfunkgeräts 10 relativ zur Erde unter Nutzung eines satellitengestützten Positionierungssystems nicht möglich ist, wird das lokale Funknetz 14 zur Positionsbestimmung verwendet.

Der Nutzer 12 kann dadurch mit Informationen über denjenigen der Teilbereiche 32 versorgt werden, in dem sich der Nutzer 12 mit dem Mobilfunkgerät 10 aufhält. Dazu wird eine mit demjenigen der Teilbereiche 32 korrespondierende Web-Seite mittels des Web-Browsers 24 angezeigt, in dem sich der Nutzer 12 mit dem Mobilfunkgerät 10 aktuell aufhält.

Bewegt sich der Nutzer 12 mit dem Mobilfunkgerät 10 von diesem Teilbereich 32 zu einem anderen der Teilbereiche 32, so wird dann eine weitere, unterschiedliche Web-Seite mit Informationen über den anderen Teilbereich 32 mittels des Web-Browsers 24 angezeigt.

Dabei muss nicht zwangsläufig jeder der Teilbereiche 32 mit einem Netzwerkgerät 20 versehen sein. Es reicht eine entsprechende Anzahl an Netzwerkgeräten 20, beispielsweise drei Netzwerkgeräte 20 aus, um zu ermitteln, in welchem der Teilbereiche 32 sich das Mobilfunkgerät 10 und somit der Nutzer 12 aufhalten und um somit den Nutzer 12 bedarfsgerecht und gezielt mit Informationen zu versorgen.

## Patentansprüche

1. Verfahren zum Betreiben eines mit wenigstens einem Funknetz (14) über Funktechnik verbindbaren, wenigstens eine Anzeige (22) und wenigstens eine Recheneinrichtung zum Ausführen wenigstens eines Computerprogramms (24) zum Darstellen eines in einem Computernetzwerk bereitgestellten und über das Funknetz (14) abrufbaren Inhalts auf der Anzeige (22) aufweisenden Mobilfunkgeräts (10), bei welchem das Mobilfunkgerät (10) über Funktechnik mit dem Funknetz (14) verbunden wird,
**dadurch gekennzeichnet, dass**
ein automatisches Öffnen des Computerprogramms (24) mittels der Recheneinrichtung in Abhängigkeit von einem Verbindungszustand des mit dem Funknetz (14) verbundenen Mobilfunkgeräts (10) bewirkt und zumindest ein Teil des Inhalts mittels des geöffneten Computerprogramms (24) auf der Anzeige (22) angezeigt wird, wobei:
- das Mobilfunkgerät (10) mit wenigstens einem Netzwerkgerät (20) des Funknetzes (14) über Funktechnik verbunden wird, wobei der Verbindungszustand in Abhängigkeit von einer Signalstärke eines Signals, welches vom Netzwerkgerät (20) an das Mobilfunkgerät (10) übermittelt wird, und/oder in Abhängigkeit von einer mittels des Netzwerkgeräts (20) ermittelten Position des Mobilfunkgeräts (10) relativ zu dem Netzwerkgerät (20) ermittelt wird, und/oder
- der Verbindungszustand in Abhängigkeit von einer Zeitdauer, über welche das Mobilfunkgerät (10) mit dem Funknetz (14) über Funktechnik verbunden ist, ermittelt wird.

2. Verfahren nach Anspruch 1,
dadurch gekenntzeichnet, dass
als der Teil des Inhalts eine Internetseite, insbesondere eine Web-Seite, des Internets, insbesondere des World Wide Web, mittels des Computerprogramms (24) angezeigt wird.

3. Verfahren nach Anspruch 1 oder 2,
**dadurch gekennzeichnet, dass**
das Mobilfunkgerät (10) mit einem drahtlosen lokalen Netzwerk (14) als dem Funknetz (14) verbunden wird.

4. Verfahren nach einem der vorhergehenden Ansprüche,
**dadurch gekennzeichnet, dass**
mittels des Funknetzes (14) eine Position des Mobilfunkgeräts (10) relativ zur Erde und/oder relativ zu wenigstens einem Netzwerkegerät (20) des Funknetzes (14) ermittelt wird, wobei in Abhängigkeit von der ermittelten Position zumindest ein vom angezeigten Teil des Inhalts unterschiedlicher, weiterer Teil des Inhalts angezeigt wird.

5. Verfahren nach einem der vorhergehenden Ansprüche,
**dadurch gekennzeichnet, dass**
in Abhängigkeit von dem Verbindungszustand wenigstens eine, mittels eines durch die Recheneinrichtung ausführbaren Computerprogramms auf der Anzeige (22) anzeigbare Nachricht an das Mobilfunkgerät (10) übermittelt wird.

6. Verfahren nach Anspruch 5,
**dadurch gekennzeichnet, dass**
als die Nachricht eine E-Mail übermittelt wird.

7. Verfahren nach einem der Ansprüche 5 oder 6,
**dadurch gekennzeichnet, dass**
die Nachricht in Abhängigkeit von wenigstens einer mobilfunkgerätespezifischen und beim Verbinden an das Funknetz übertragenen Information übermittelt wird.

8. Mobilfunkgerät (10), mit einer Funktechnikeinrichtung zum Verbinden des Mobilfunkgeräts (10) mit wenigstens einem Funknetz (10) über Funktechnik, mit wenigstens einer Anzeige (22) und mit wenigstens einer Recheneinrichtung zum Ausführen wenigstens eines Computerprogramms (24), mittels welchem ein in einem Computernetzwerk bereitgestellter und über das Funknetz (14) abrufbarer Inhalt auf der Anzeige (22) des Mobilfunkgeräts (10) darstellbar ist,
**dadurch gekennzeichnet, dass**
die Recheneinrichtung dazu ausgelegt ist, in Abhängigkeit von einem Verbindungszustand des mit dem Funknetz (14) verbundenen Mobilfunkgeräts (10) ein automatisches Öffnen des Computerprogramms (24) zu bewirken und zumindest einen Teil des Inhalts mittels des geöffneten Computerprogramms (24) auf der Anzeige (22) anzuzeigen, wobei:
- das Mobilfunkgerät (10) mit wenigstens einem Netzwerkgerät (20) des Funknetzes (14) über Funktechnik verbunden wird, wobei die Recheneinrichtung dazu ausgelegt ist, den Verbindungszustand in Abhängigkeit von einer Signalstärke eines Signals, welches vom Netzwerkgerät (20) an das Mobilfunkgerät (10) übermittelt wird, und/oder in Abhängigkeit von einer mittels des Netzwerkgeräts (20) ermittelten Position des Mobilfunkgeräts (10) relativ zu dem Netzwerkgerät (20) zu ermitteln, und/oder
- die Recheneinrichtung dazu ausgelegt ist, den Verbindungszustand in Abhängigkeit von einer Zeitdauer, über welche das Mobilfunkgerät (10) mit dem Funknetz (14) über Funktechnik verbunden ist, zu ermitteln.

9. Verfahren zum automatischen Senden wenigstens einer Nachricht an ein mit einem Mobilfunknetz und mit zumindest einem, vom Mobilfunknetz unterschiedlichen, lokalen Funknetz (14) über Funktechnik verbindbares, wenigstens eine Anzeige (22) und wenigstens eine Recheneinrichtung zum Ausführen wenigstens eines Computerprogramms zum Darstellen einer an das Mobilfunkgerät (10) übermittelten Nachricht auf der Anzeige (22) aufweisendes Mobilfunkgerät (10), bei welchem an das mit dem lokalen Funknetz (14) verbundene Mobilfunkgerät (10) eine auf der Anzeige (22) mittels des Computerprogramms anzeigbare Nachricht in Abhängigkeit von einem Verbindungszustand des mit dem Funknetz (14) verbundenen Mobilfunkgeräts (10) übermittelt wird, wobei:
- das Mobilfunkgerät (10) mit wenigstens einem Netzwerkgerät (20) des Funknetzes (14) über Funktechnik verbunden wird, wobei der Verbindungszustand in Abhängigkeit von einer Signalstärke eines Signals, welches vom Netzwerkgerät (20) an das Mobilfunkgerät (10) übermittelt wird, und/oder in Abhängigkeit von einer mittels des Netzwerkgeräts (20) ermittelten Position des Mobilfunkgeräts (10) relativ zu dem Netzwerkgerät (20) ermittelt wird, und/oder
- der Verbindungszustand in Abhängigkeit von einer Zeitdauer, über welche das Mobilfunkgerät (10) mit dem Funknetz (14) über Funktechnik verbunden ist, ermittelt wird.

10. Verfahren nach Anspruch 9,
**dadurch gekennzeichnet, dass**
die Nachricht über das lokale Funknetz (14) übermittelt wird.

## Claims

1. A method for operating a mobile radio apparatus (10) connectable to at least one radio network (14) via radio technology, the mobile radio apparatus having at least one display (22) and at least one computing device for executing at least one computer program (24) for presenting, on the display (22), content provided in a computer network and retrievable via the radio network (14), in which method the mobile radio apparatus (10) is connected to the radio network (14) via radio technology,
**characterized in that**
automatic opening of the computer program (24) is effected by means of the computing device on the basis of a connection state of the mobile radio apparatus (10) connected to the radio network (14), and at least a part of the content is displayed on the display (22) by means of the opened computer program (24), wherein:
- the mobile radio apparatus (10) is connected to at least one network apparatus (20) of the radio network (14) via radio technology, wherein the connection state is determined on the basis of a signal strength of a signal communicated from the network apparatus (20) to the mobile radio apparatus (10) and/or on the basis of a position of the mobile radio apparatus (10) relative to the network apparatus (20), the position being determined by means of the network apparatus (20), and/or
- the connection state is determined on the basis of a period of time over which the mobile radio apparatus (10) is connected to the radio network (14) via radio technology.

2. The method according to claim 1,
**characterized in that**
as the part of the content an Internet site, in particular a web page, of the Internet, in particular of the World Wide Web, is displayed by means of the computer program (24).

3. The method according claim 1 or 2,
**characterized in that**
the mobile radio apparatus (10) is connected to a wireless local area network (14) as the radio network (14).

4. The method according to anyone of the preceding claims,
**characterized in that**
a position of the mobile radio apparatus (10) relative to the earth and/or relative to at least one network apparatus (20) of the radio network (14) is determined by means of the radio network (14), wherein at least a further part of the content different from the displayed part of the content is displayed on the basis of the determined position.

5. The method according to anyone of the preceding claims,
**characterized in that**
at least one message capable of being displayed on the display (22) by means of a computer program executable by the computing device is communicated to the mobile radio apparatus (10) on the basis of the connection state.

6. The method according to claim 5,
**characterized in that**
as the message an email is communicated.

7. The method according to any one of claims 5 or 6,
**characterized in that**
the message is communicated on the basis of at least one information specific to the mobile radio apparatus and transmitted upon connection to the radio network.

8. A mobile radio apparatus (10) comprising a radio technology device for connecting the mobile radio apparatus (10) to at least one radio network (10) via radio technology, at least one display (22) and at least one computing device for executing at least one computer program (24) by means of which content provided in a computer network and retrievable via the radio network (14) can be presented on the display (22) of the mobile radio apparatus (10),
**characterized in that**
the computing device is configured to effect automatic opening of the computer program (24) on the basis of a connection state of the mobile radio apparatus (10) connected to the radio network (14), and to display at least a part of the content on the display (22) by means of the opened computer program (24), wherein:
- the mobile radio apparatus (10) is connected to at least one network apparatus (20) of the radio network (14) via radio technology, wherein the computing device is configured to determine the connection state on the basis of a signal strength of a signal communicated from the network apparatus (20) to the mobile radio apparatus (10) and/or on the basis of a position of the mobile radio apparatus (10) relative to the network apparatus (20), the position being determined by means of the network apparatus (20), and/or
- the computing is configured to determine the connection state on the basis of a period of time over which the mobile radio apparatus (10) is connected to the radio network (14) via radio technology.

9. A method for automatically transmitting at least one message to a mobile radio apparatus (10) connectable to a mobile communications network and to, via radio technology, at least one local radio network (14) different from the mobile communications network, the mobile radio apparatus having at least one display (22) and at least one computing device for executing at least one computer program for presenting, on the display (22), a message communicated to the mobile radio apparatus (10), in which method a message capable of being displayed on the display (22) by means of the computer program is communicated to the mobile radio apparatus (10) connected to the local radio network (14) on the basis of a connection state of the mobile radio apparatus (10) connected to the local radio network (14), wherein:
- the mobile radio apparatus (10) is connected to at least one network apparatus (20) of the radio network (14) via radio technology, wherein the connection state is determined on the basis of a signal strength of a signal communicated from the network apparatus (20) to the mobile radio apparatus (10) and/or on the basis of a position of the mobile radio apparatus (10) relative to the network apparatus (20), the position being determined by means of the network apparatus (20), and/or
- the connection state is determined on the basis of a period of time over which the mobile radio apparatus (10) is connected to the radio network (14) via radio technology.

10. The method according to claim 9,
**characterized in that**
the message is communicated via the local radio network (14).

## Revendications

1. Procédé d'exploitation d'un appareil de radiocommunication mobile (10), avec au moins un réseau de radiocommunications (14) pouvant être connecté par radiocommunication, présentant au moins un écran (22) et au moins un dispositif de calcul, destiné à exécuter au moins un programme informatique (24), destiné à représenter un contenu, mis à disposition dans un réseau informatique et consultable par l'intermédiaire du réseau de radiocommunications (14) sur l'écran (22), pour lequel l'appareil de radiocommunication mobile (10) est relié au réseau de radiocommunications (14) par radiocommunication,
**caractérisé en ce**
**qu'**une ouverture automatique du programme informatique (24) s'opère au moyen du dispositif de calcul en fonction d'un état de connexion de l'appareil de radiocommunication mobile (10) relié au réseau de radiocommunications (14) et qu'au moins une partie du contenu est affichée à l'écran (22) au moyen du programme informatique (24) ouvert,
- l'appareil de radiocommunication mobile (10) étant relié par radiocommunication à au moins un appareil de réseau (20) du réseau de radiocommunications (14), l'état de connexion étant déterminé en fonction de la force de signal d'un signal, lequel est transmis par l'appareil de réseau (20) à l'appareil de radiocommunication mobile (10) et / ou en fonction d'une position de l'appareil de radiocommunication mobile (10), déterminée au moyen de l'appareil de réseau (20) par rapport à l'appareil de réseau (20) et / ou
- l'état de connexion étant déterminé en fonction d'une durée, par l'intermédiaire de laquelle l'appareil de radiocommunication mobile (10) est relié au réseau de radiocommunications (14) par radiocommunication.

2. Procédé selon la revendication 1,
**caractérisé en ce**
**qu'**un site Internet, en particulier un site web, est affiché comme étant la partie du contenu de l'Internet, en particulier du World Wide Web, au moyen du programme informatique (24).

3. Procédé selon la revendication 1 ou 2,
**caractérisé en ce que**
l'appareil de radiocommunication mobile (10) est relié à un réseau local sans fil (14) comme étant le réseau de radiocommunications (14).

4. Procédé selon l'une des revendications précédentes, **caractérisé en ce**
**qu'**une position de l'appareil de radiocommunication mobile (10) par rapport à la terre et / ou par rapport à au moins un appareil de réseau (20) du réseau de radiocommunications (14) est déterminée au moyen du réseau de radiocommunications (14), au moins une autre partie du contenu, différente de la partie affichée, étant affichée en fonction de la position déterminée.

5. Procédé selon l'une des revendications précédentes, **caractérisé en ce**
**qu'**au moins un message, pouvant être affiché sur l'écran (22) est transmis à l'appareil de radiocommunication mobile (10) en fonction de l'état de connexion, au moyen d'un programme informatique pouvant être exécuté par le dispositif de calcul.

6. Procédé selon la revendication 5,
**caractérisé en ce**
**qu'**un courriel est transmis à titre de message.

7. Procédé selon l'une des revendications 5 ou 6,
**caractérisé en ce que**
le message est transmis en fonction d'au moins une information, propre à l'appareil de radiocommunication mobile et transférée au réseau de radiocommunications lors de la connexion.

8. Appareil de radiocommunication mobile (10), avec un dispositif de radiocommunication, destiné à relier l'appareil de radiocommunication mobile (10) à au moins un réseau de radiocommunications (10) par radiocommunication, avec au moins un écran (22) et avec au moins un dispositif de calcul, destiné à exécuter au moins un programme informatique (24), au moyen duquel un contenu, mis à disposition dans un réseau d'ordinateurs et consultable par l'intermédiaire du réseau de radiocommunications (14), peut être représenté sur l'écran (22) de l'appareil de radiocommunication mobile (10),
**caractérisé en ce que**
le dispositif de calcul est conçu pour produire, en fonction d'un état de connexion de l'appareil de radiocommunication mobile (10), relié au réseau de radiocommunications (14), une ouverture automatique du programme informatique (24) et pour afficher sur l'écran (22) au moins une partie du contenu au moyen du programme informatique (24) ouvert :
- l'appareil de radiocommunication mobile (10) étant relié par radiocommunication à au moins un appareil de réseau (20) du réseau de radiocommunications (14), le dispositif de calcul étant conçu pour déterminer l'état de connexion en fonction d'une force de signal d'un signal, lequel est transmis par l'appareil de réseau (20) à l'appareil de radiocommunication mobile (10) et / ou en fonction d'une position de l'appareil de radiocommunication mobile (10) par rapport à l'appareil de réseau (20), déterminée au moyen de l'appareil de réseau (20) et / ou
- le dispositif de calcul étant conçu pour déterminer l'état de connexion en fonction d'une durée, par l'intermédiaire de laquelle l'appareil de radiocommunication mobile (10) est relié par radiocommunication au réseau de radiocommunications (14).

9. Procédé d'envoi automatique d'au moins un message à un appareil de radiocommunication mobile (10), pouvant être relié par radiocommunication à un réseau de radiocommunication mobile et à au moins un réseau de radiocommunications local (14), différent du réseau de radiocommunications mobiles, présentant au moins un écran (22) et au moins un dispositif de calcul, destiné à exécuter au moins un programme informatique, destiné à afficher sur l'écran (22) un message, transmis à l'appareil de radiocommunication mobile (10), pour lequel un message, affichable sur l'écran (22) au moyen du programme informatique, est transmis à l'appareil de radiocommunication mobile (10), relié au réseau de radiocommunication local (14), en fonction d'un état de connexion de l'appareil de radiocommunication mobile (10), relié au réseau de radiocommunication (14) :
- l'appareil de radiocommunication mobile (10) étant relié par radiocommunication à au moins un appareil de réseau (20) du réseau de radiocommunication (14), l'état de connexion étant déterminé en fonction de la force de signal d'un signal, lequel est transmis à l'appareil de radiocommunication mobile (10) par l'appareil de réseau (20) et / ou en fonction d'une position de l'appareil de radiocommunication mobile (10) par rapport à l'appareil de réseau (20), déterminée au moyen de l'appareil de réseau (20) et / ou
- l'état de connexion étant déterminé en fonction d'une durée, par l'intermédiaire de laquelle l'appareil de radiocommunication mobile (10) est relié par radiocommunication au réseau de radiocommunications (14).

10. Procédé selon la revendication 9,
**caractérisé en ce que**
le message est transmis par l'intermédiaire du réseau de radiocommunications local (14).
